# EUROPEAN PATENT SPECIFICATION

(11) **EP 1 053 982 B1**
(45) Date of publication and mention of the grant of the patent: **18.08.2004**
(21) Application number: 00110764.8
(22) Date of filing: 19.05.2000
(51) Int. Cl.: C04B 33/02

(54) **Manufacturing process of tiles**
Herstellungsverfahren für Fliesen
Procédé de fabrication de carreaux

(30) Priority: 19.05.1999 IT FI990117
(43) Date of publication of application: 22.11.2000
(73) Proprietor: Techplant S.R.L., 41043 Formigine (Province of Modena) (IT)
(72) Inventor: Semeraro, Massimo, 41049 Sassuolo (Province of Modena) (IT)
(74) Representative: Gervasi, Gemma, Dr.

(56) References cited:
- DE-A- 2 706 659
- US-A- 3 591 097
- SIL'VESTROVICH T S ET AL: "IMPROVING THE PRODUCTION TECHNOLOGY OF PRESS-POWDERS FOR CERAMIC TILES" GLASS AND CERAMICS, vol. 43, no. 11-12, November 1986 (1986-11), pages 558-563, XP002130477

## Description

### Field of the invention

The present invention refers to the field of the manufacturing of tile and particularly of the manufacturing of ceramic tiles for outdoor applications.

The manufacturing processes of the grains forming the tiles, the grains and the tiles formed therefrom, and the manufacturing plant of the tiles are part of the invention.

### Background of the art

At present, the already known forming processes of tiles are substantially based on the use of grains obtained by the wet "atomisation" of a mixture which has been previously milled.

Through the atomisation hollow grains are obtained which during the following manufacturing steps, particularly during the tile press forming, are deformed by the mechanical pressure exerted by the press so that they lose most of their physical properties.

Furthermore, the mechanical action of the press involves the effect of "polishing" the external surface of the manufactured tile so that the latter presents the negative characteristic of a low friction factor.

This negative effect, particularly relevant for tiles intended to outside applications, is presently overcame by further treatments of the tile surface, which involve extra costs and a longer manufacturing time.

In Silvestrovich T. S. et al. "Improving the production technology of press-powder for ceramic tiles" - Glass and Ceramics vol.43 no.11-12 the production of ceramic tiles from solid grains is described and compared in terms of energy consumption in respect to the conventional production of tiles from powder obtained by wet milling.

The document lacks to describe how to solve the problem of the friction coefficient of the surface of the manufactured tiles.

### Aim of the invention

The present invention intends to provide a tile manufacturing process of tiles, able to overcome the drawbacks of the already known processes.

A further aim of the invention is to provide tiles having improved characteristics in respect to the already known tiles, particularly as far as the surface characteristics and the mechanical strength properties of the tiles are concerned.

A still further aim of the invention is to provide a plant to carry out the process.

### Summary of the invention

These aim have been reached according to the invention by a tiles manufacturing process comprising the steps of: milling an initial mixture of ceramic materials, dosing a selected mixture of powders obtained by the milling process, aggregation of the powders in the shape of solid, preferably spherical grains, drying of the grains.

Downstream said aggregation step it is also provided a dosing step of the selected mixture of grains and a press forming step of this mixture to obtain the tiles.

Preferably, the milling step is carried out by a continuous vertical dryer mill;
the dosing step is carried out by a dosing buffer controlled by a weight loss measurement;
the aggregation step is preferably carried out by a rotating cylindrical chamber granulator provided with a radial water nebulization rod and/or with horizontal nozzles able to nebulize water added with coloured pigments in order to obtain coloured grains. The granulator is also provided with an external heating obtained by catalytic lamps;
the grains drying step is carried out by a fluid bed dryer which preferably reduce the moisture content of the grains from the initial 15-16% to 5-7% by a flow of hot air passing through the micro holes of a separator sheet.

The invention also comprises a press step of a mixture of grains carried out by presses which are provided with press pads, or blocks, covered by a thick and soft layer of rubber; a step of firing the press formed grains, a finishing step of the tile and a final firing step of the tile.

The mixing step is preferably carried out through a main weigher belt having a translating diagonal spatula which gathers and distributes on the belt the grains of the desired colour.

The manufacturing process of the tiles is preferably controlled by a programmable microprocessor unit by which it is possible to predetermine the amounts to be treated and the times of the process steps.

A first advantage substantially consists in that thanks to the presence of the rubber covered press pads, the grains are subjected to a minimum crumbling during the compressing and the obtained tiles exhibit a high friction factor and a greater roughness of the external surface in respect to the traditional tiles.

A second advantage consists in that the soft rubber layer leave the grains at the external surface of the tile to emerge from the same surface, so that they provide the tile of a high degree of roughness.

A third advantage consists in the possibility of adding the mixture with the slaked lime which can be recovered as waste of the fume filter of the kiln.

This solution is impossible in the traditional wet mills because, in this case, the lime modifies the pH and the rheological properties of the casting slip.

A further advantage consists in that during the firing step the tile is subjected to a shrinkage reduced of the 20% in respect to the tiles produced by the atomisation process.

A still further advantage consists in that the solid grains can be utilised both as coating and as mass material as well as they can be mixed with mass grains or even coloured.

These and other advantages will be evident to the man skilled in the art from the following description and the alleged non limiting drawings, in which:

### List of drawings

- fig.1 schematically shows a plant suitable to carry out the process of the invention;
- fig.2a shows the roughness properties of a tile according to the invention;
- fig.2b shows the roughness properties of a traditional tile;
- fig.2c shows the roughness properties of the tile of fig.2a after firing;
- fig.2d shows the roughness properties of the tile of fig.2b after firing;
- fig.2e shows the roughness properties of a sintered tile according to the invention;
- fig. 3a, 3b respectively show a side picture of a tile according to the invention and of a conventional tile.
- fig. 4a, 4b respectively show a top picture of a tile according to the invention and of a conventional tile.

### Detailed description of the invention

In a preferred embodiment of the invention and with reference to the alleged drawings a ceramic grains manufacturing process according to the invention comprises the selection from several ore bins of a mixture of partially crashed raw materials, the dosing of the mixture by electronically controlled belts and its discharging into a buffer tank of a mill. In this way is possible to operate the maintenance of the weighers without stopping the mill.

In the described example the mixture is selected for the manufacturing of porcelain stoneware tiles and has the following composition:

| Component | % |
|---|---|
| Kaolinite clay | 20-25% |
| Illite clay | 25-30% |
| Sodium feldspar | 25-30% |
| Sodium-Potassium feldspar | 10-15% |
| Sand | 5-10% |
| Talc | 2-4% |
| Raw waste | 0.5-1% |
| Fired waste | 2-4% |
| Slaked lime | 0.05-0.1 |

The milling step is preferably carried out by a vertical roller pulveriser or, mill, provided with a dryer and a dynamic separator.

The pulveriser consists of two big diameter conical rollers rotating around their fixed axis and which exert a high pressure on a circular track. In the described example this pressure varies from 8 to 11 MPa (Megapascal).

The raw material is fed by a disk feeder on a lateral slope and is conveyed between the rollers and the track to be milled. The adjusting cycle of the milling step is based on the pressure difference between the inlet of the mill "negative" depression and the outlet of the mill "positive" depression. The difference value is transmitted to an inverter device controlling the rotational speed of the engine of the feeder. Whether the pressure difference remains unchanged the same happens to the rotational speed of the engine. Whether the pressure increases, the engine speed, and then the feed flow, decreases and vice versa whether the pressure decreases.

Advantageously it is possible to adjust the pressure depending on the hardness of the materials in order to treat materials having very high hardness. In the described example the hardness can vary from 5 to 6 of the MOHS scale.

Advantageously, in respect to the traditional pendulum mills the milling pressure does not depend on the speed of the mill and it is then possible to keep the speed low without changing the pressure.

In order to avoid the rollers become dirty and to increase their efficiency, the inlet materials are completely dried by the drying system. The granulometry of the outlet material is selected by a dynamic separator which acts depending on the pressure difference in the pneumatic circuit of the mill and particularly by changing the flow of a fan which is placed in counter flow against the separator. The size of the outlet materials changes depending on the variations of the fan flow.

For example, the mill can pulverise powders having a screen size from 96 to 98% less than 16.000 meshes per cm² (equivalent to 45 microns) of the sieve grid.

Downstream the mill there is placed a sleeve filter which separates the powders from the air flow and sends the powders to a store station from where they will be conveyed to the aggregation step.

Before the aggregation step the powders are collected from the store and sent to a pre-loading buffer tank from which they are collected and sent to a weighting and dosing tank. The dosing tank is provided with loading cells supporting all the powder store and with a variable speed rotary cell and a screw conveyor of the powders in order to continuously and uniformly feed the granulator. The dosing step is carried out by a continuous measurement of the reduction of the overall weight of the pre-loading buffer tank.

Advantageously, the dosing system permits an accurate and precise measurement of the feed without incurring on the drawbacks of the traditional weigher belts, even if provided with cover, on which the powders can oscillate and it is not possible to efficiently confine them.

The aggregation step is carried out by a cylindrical chamber granulator in to which the properly dosed powders are fed and rotate. The milled mixture, when it is utilized to produce tile grains it is aggregate in virtue of the rotational motion which is provided by a dispersion bar which atomises water in radial direction. When grains coloured by water suspended pigments are treated, parallel groups of horizontal nozzles are placed inside the cylindrical chamber.

Advantageously, the above described process permits to produce composed coloured grains by introducing the different inks contemporaneously or spacing out the introduction of the inks depending on a timing set by the electronic control unit.

Once the powder has been humidified (approximately 15-16% of humidity) the rolling motion inside the sinusoidal body of the granulator is able to homogenise the humidity and it results in the optimisation of the aggregation step.

The granulator rotates around itself and it is supported by rubber wheels absorbing the vibrations. In order to avoid that scale caused by the condensation arises in the aggregation chamber, the granulator is heated by external catalytic lamps.

Preferably the colour of the external surface of the aggregation chamber is black to improve heat absorption.

The aggregated powders are then conveyed on a dryer bed and are dried by an approximately 150°C hot air flow passing through the micro holes of a separator metal sheet, until the aggregated powders reach an humidity content of 5 to 7 %.

Before the outlet, the aggregated grains are cooled to the room temperature in order to avoid condensation during the transport of the grains.

Grains having a bigger size in respect to a prefixed value can be selected and subjected to rough machining in a vertical granulator, while the remaining grains are sent to the storage.

Advantageously, it is possible to obtain big grains having an average diameter of approximately 5-10 mm, and widely bigger than the grains obtained by atomisation.

At the end of this step a predetermined number of storage tanks are filled and from these tanks it is possible to select and compose the mixture of coloured grains to be sent to the next press forming step.

According of the invention said mixture is made up by several belts which convey the grains of the various colours on a main belt. In alternative, the mixing step can be carried out by a translation spatula acting on the main belt and which accumulates and distributes the grains according to a prefixed sequence controlled by the electronic control unit. The mixture of grains is then conveyed from the main belt to the hopper of the press.

In the press forming step the selected mixture of grains is introduced in the cavities of the die for example by means of a floating grid and then it is subjected to a high pressure (approximately 450-500 kg/cm², 1 kg/cm² = 9.81x10⁴ Pa) which allows the tile to be formed.

According of the invention the press forming is carried out by a press having press pads or blocks covered by a soft rubber layer (softness of approximately 45 Shore or more, preferably 60 Shore ) of high thickness (approximately 3 mm or more, preferably 5 mm).

Advantageously, the compression of the solid grains involves a very little dispersion and the obtained surface presents a high friction coefficient, the structure of the surface grains being substantially unchanged.

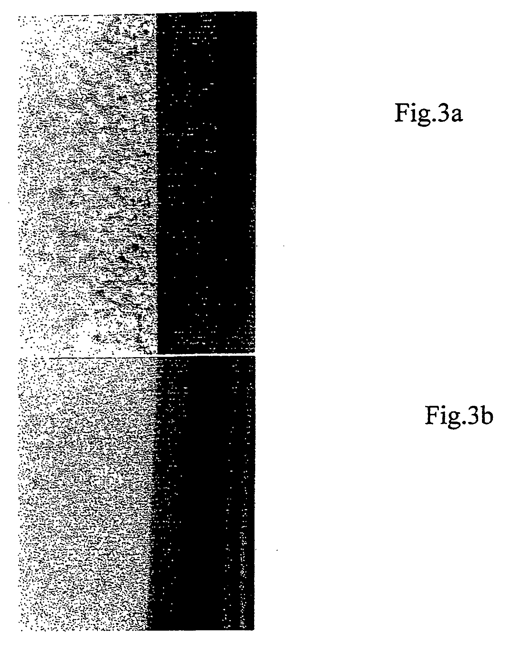

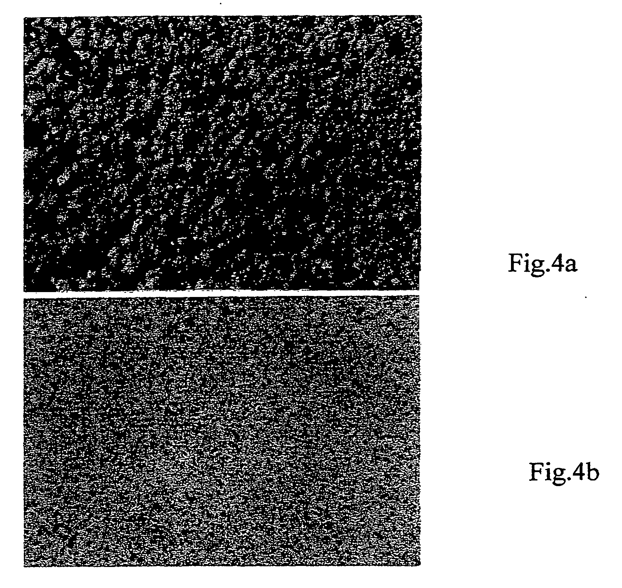

From figs.3a and 4a and is evident that a tile of the invention presents solid grains partially emerging from the surface of the tile which has been subjected to the press step, so that the surface presents a very high surface roughness in respect to the traditional tiles shown in figs. 3b, 4b.

After the press forming step the formed tiles are conveyed to a dryer operating at approximately 200°C and which reduces the humidity content of the tiles to 0.5%.

Downstream the dryer the tiles can possibly be finished by grinding and then collected before the firing.

The firing step comprises thermal cycles of 90 minutes at a working temperature of approximately 1220-1250°C which lead to the complete sintering of the material.

More particularly, the extent of the firing cycle varies proportionally to the density of the product. In the cited example a 90 minutes cycle is applied to the manufacturing of a 14 mm thick tiles having a density of 40Kg/m² while the optimum cycle for the manufacturing of 9 mm thick tiles having a density of 18 Kg/m² covers approximately 45 minutes.

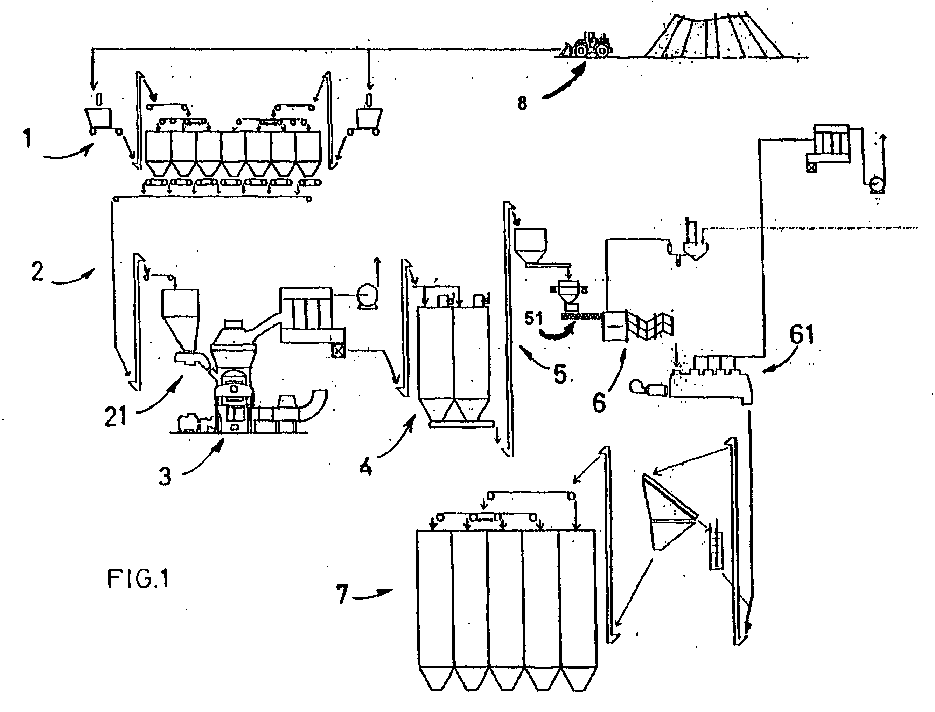

With reference to fig.1, a ceramic tiles manufacturing plant according to the invention comprises storing means 1 of at least one mixture of raw material; selection and dosing means 2 of said mixture and feeding means 21 of a mill 3 intended to the milling of said dosed mixture; storing means 4 of at least one milled mixture; selecting means 5 of at least one milled mixture from said storing means 4 and dosing and feeding means 51 of a granulator 6 intended to the manufacturing of solid grains; drying means 61 for the adjustable drying of said solid grains; riddling and storing means 7 of at least one type of grains; press forming means of said grains for the forming of ceramic tiles provided with press pads covered by a layer of soft rubber, and drying and sintering means of the formed tiles.

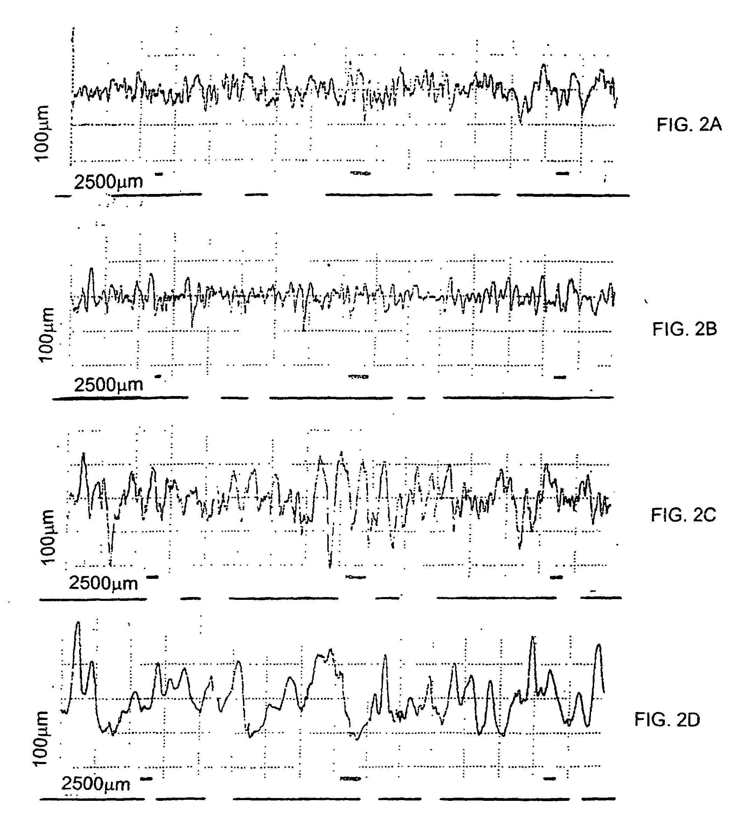

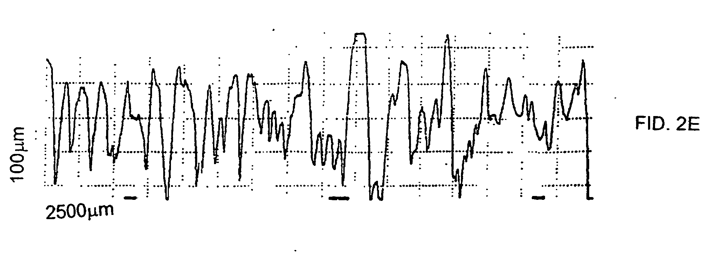

As an example, and with reference to figs. 2a-2d, the following are the results obtained by grains according to the invention (GRC), compared with the results obtained by traditional atomised grains (ATOM), both manufactured from the same raw materials.

Grains having the same granulometry, approximately 0.8 mm, show the following apparent density (weight/volume):
ATOM = 0.98 g/cm³
GRC = 1.12 g/cm³

These grains have been utilised to manufacture tiles dried at a temperature of 110°C and compressed by a pressure of 450 kg/cm² (1 kg/cm² = 9.81x10⁴ Pa), the apparent density has been measured obtaining:
ATOM= 1.90 g/cm³
GRC= 2.03 g/cm³

And the roughness:
ATOM = 146.0 (Fig.2b)
GRC = 177.5 (Fig.2a)

After the firing steps the tiles show the following roughness:
ATOM = 330 (Fig.2d)
GRC = 350 (Fig.2c)

Roughness and average friction coefficient of sintered tiles produced from grains having long body and average diameter of 4 mm have been measured. However, in this case it is not possible to make a direct comparison because the aggregation step by atomisation does not permit the production of grains having a diameter bigger than 800 micron or a little more.
Roughness = 591,9 (Fig. 2e)
Average friction coefficient = 0.75 - 0.80

Should also be noted that the average friction coefficient of the porcelain stoneware tiles commercially available varies from 0.6 to 0.7.

Roughness has been measured by a measuring device PERTHOMETER S3P manufactured by MAHR-PERTHEN GmbH.

The average friction coefficient has been measured by the B.C.R. (British Ceramic Research) method.

As shown by the cited examples, from the same raw material and for the same grain dimensions the grains obtained according to the invention exhibit a very higher roughness. Furthermore it is possible to produce bigger grains (3-4 mm compared with 800 micron for the traditional atomised grains) and from said grains tiles having high average friction coefficient can be obtained.

In figs.2a-2d the roughness profiles are shown in enlarged view and in respect to a reference scale.

In fig.2e with the commercial name "VITRAX" has been indicated a tile manufactured according to the invention.

The present invention has been described with reference to a preferred example, ma it is obvious that modifications can be made without outgoing from the scope of the invention.

As an example, the manufacturing process of tile of the invention can be performed by use of solid non spherical grains obtained by compressing conventional hollow grains or wet powders through operations like extrusion, drawing, rolling or pressing of the grains, and then by disgregating the compressed powders to obtain substantially prismatic solid grains of the desired dimensions.

Advantageously, it is possible to compress said hollow grains or wet powders by use of specially designed rolls able to engrave ornamental drawings on the surface of the compressed powders.

In this way, once the compressed powders have been disgregated, the obtained grains, and the tiles manufactured therefrom, present at least a part of the ornamental drawings on their surface.

## Claims

1. Manufacturing process of ceramic tiles, comprising a selection and dosing step of at least one mixture of raw materials to be milled, a milling step of said mixture, a dosing step of the milled mixture, a manufacturing process of ceramic solid grains from said dosed and milled mixture, a press forming step of said grains and a step of firing the press formed grains, **characterised in that** said press forming is carried out by presses provided with press pads covered by a layer of soft rubber in order to keep the structure of the grains at the surface of the manufactured tile substantially unmodified.

2. Process according to claim 1, **characterised in that** said press forming step is performed in such a way that the grains at the external surface of the tile to at least partially emerge form the tile surface.

3. Process according to claim 1, **characterised in that** said press pads are covered by a layer of soft rubber having a softness of 45 Shore or more and a thickness of 3 mm or higher.

4. Process according to claim 1, **characterised in that** said grains are substantially spherical solid grains obtained by granulation.

5. Process according to claim 1, **characterised in that** said grains are substantially prismatic solid grains obtained by compressing hollow grains or fine powders and then by disgregating the compressed powders.

6. Process according to claim 1, **characterised in that** said press forming step is carried out by a pressure between 450 to 500 kg/cm ².

7. Process according to claim 1, **characterised in that** said milling step of the raw material mixture is carried out by a vertical dryer roll mill provided with a disk feeder, the mill being constituted by two conical rolls rotating around fixed axis and exerting on a horizontal circular track an adjustable pressure preferably comprised between 8 to 11 MPa [80 to 110 bar].

8. Process according to claim 2, **characterised in that** the milling adjusting cycle is based on the measurement of the pressure difference from inlet and outlet of the pneumatic circuit of the mill, the pressure difference value being transmitted to an inverter device which controls the rotational speed of the mill feeder.

9. Process according to claim 4, **characterised in that** said grains manufacturing step is carried out by a granulator provided of cylindrical chamber into which the milled mixture is introduced and aggregated by a rotating motion and of zig-zag chambers where the spherical grains are finished, the granulator is further provided of a dispersion rod and of a radial nebulization of water in order to obtain a humidity content of the mixture of approximately 15 to 16%.

10. Process according to claim 9, **characterised in that** coloured grains are manufactured by a distribution of water suspended colour pigments obtained by groups of horizontal parallel nozzles placed inside the cylindrical chamber.

11. Process according to claim 9, **characterised in that** the granulator rests on vibrations absorbing rubber wheels and it is heated by catalytic external lamps in order to avoid the formation of scale due to water condensation in the aggregation chamber.

12. Process according to claim 1, **characterised in that** said dosing step of at least one milled mixture is carried out by weighing a pre-loading buffer tank and monitoring its overall weight reduction.

13. Process according to claim 4 or 5, **characterised in that** said manufacturing process of solid grains comprises a final drying step which is carried out by streams of hot air at approximately 150°C which pass through the micro holes of a dryer bed in order to reduce the humidity content of the grains up to 5-7%, the grains being then cooled at the room temperature before they exit from the dryer in order to avoid condensation during the transport operation.

14. Process according to claim 1, **characterised in that** said raw material mixture consists of:
| | |
|---|---|
| Kaolinite clay | 20-25% |
| Illite clay | 25-30% |
| Sodium feldspar | 25-30% |
| Sodium-Potassium feldspar | 10-15% |
| Sand | 5-10% |
| Talc | 2-4% |
| Raw waste | 0.5-1 % |
| Fired waste | 2-4% |
| Slaked lime | 0.05-0.1 |

15. Press provided with press pads for the forming of ceramic tiles, **characterised in that** said press pads are covered by a layer of soft rubber having a softness of 45 Shore or more and said layer presents a thickness of 3 mm or higher.

16. Press according to claim 15, **characterised in that** said soft rubber layer presents a softness of 60 Shore and a thickness of 5 mm.

17. Ceramic tiles manufacturing plant comprising storing means (1) of at least one mixture of raw material (8); selection and dosing means (2) of said mixture and feeding means (21) of a mill (3) intended to the milling of said dosed mixture; storing means (4) of at least one milled mixture; selecting means (5) of at least one milled mixture from said storing means (4) and dosing and feeding means (51) of a granulator (6) intended to the manufacturing of solid grains; drying means (61) for the adjustable drying of said solid grains; riddling and storing means (7) of at least one type of grains; press forming means of said grains for the forming of ceramic tiles, **characterised in that** said press forming means are provided with press pads covered by a layer of soft rubber, and drying and sintering means of the formed tiles.

18. Ceramic tiles **characterised in that** they are formed from solid grains at least partially emerging from the external surface of the tile with a manufacturing process according to claim 1.

19. Tiles according to claim 18, **characterised in that** they present a roughness value higher than 330 measured by a measuring device PERTHOMETER S3P manufactured by MAHR-PERTHEN GmbH.

20. Tiles according to claim 18, **characterised in that** they present an average friction coefficient higher than 0.7 according to the B.C.R. measurement method.

## Patentansprüche

1. Herstellverfahren für Keramikfliesen mit einem Schritt zur Auswahl und zum Dosieren von zumindest einer Mischung aus Rohmaterialien, die gemahlen werden sollen, einem Schritt zum Mahlen der Mischung, einem Schritt zum Dosieren der gemahlenen Mischung, einem Verfahren zum Herstellen keramischer fester Körner aus der dosierten und gemahlenen Mischung, einem Schritt zum Pressformen der Körner und einem Schritt zum Brennen der pressgeformten Körner,
**dadurch gekennzeichnet,**
**dass** das Pressformen mit Pressen ausgeführt wird, die mit durch eine Lage aus weichem Gummi bedeckten Presspolstern versehen sind, um die Struktur der Körner an der Oberfläche der hergestellten Fliese im Wesentlichen unverändert zu belassen.

2. Verfahren nach Anspruch 1,
**dadurch gekennzeichnet,**
**dass** der Schritt zum Pressformen derart ausgeführt wird, dass die Körner an der Außenfläche der Fliese zumindest teilweise von der Fliesenoberfläche hervortreten.

3. Verfahren nach Anspruch 1,
**dadurch gekennzeichnet,**
**dass** die Pressenpolster durch eine Lage aus weichem Gummi bedeckt sind, der eine Weichheit von 45 Shore oder mehr und eine Dicke von 3 mm oder mehr besitzt.

4. Verfahren nach Anspruch 1,
**dadurch gekennzeichnet,**
**dass** die Körner im Wesentlichen kugelförmige feste Körner sind, die durch eine Granulierung erhalten werden.

5. Verfahren nach Anspruch 1,
**dadurch gekennzeichnet,**
**dass** die Körner im Wesentlichen prismatische feste Körner sind, die durch Komprimieren hohler Körner oder feiner Pulver und dann durch Trennen bzw. Zerteilen des komprimierten Pulvers erhalten werden.

6. Verfahren nach Anspruch 1,
**dadurch gekennzeichnet,**
**dass** der Schritt zum Pressformen bei einem Druck zwischen 450 bis 500 kg/cm² ausgeführt wird.

7. Verfahren nach Anspruch 1,
**dadurch gekennzeichnet,**
**dass** der Schritt zum Mahlen der Rohmaterialmischung durch eine vertikale Walzenmühle mit Trockner ausgeführt wird, die mit einer Scheibenzuführeinrichtung versehen ist, wobei die Mühle durch zwei konische Walzen gebildet wird, die um eine fixierte Achse rotieren und auf eine horizontale kreisförmige Bahn einen einstellbaren Druck ausüben, der bevorzugt zwischen 8 bis 11 MPa (80 bis 110 bar) liegt.

8. Verfahren nach Anspruch 2,
**dadurch gekennzeichnet,**
**dass** der Mahleinstellzyklus auf der Messung des Druckunterschiedes von dem Einlass und Auslass des Druckluftkreises der Mühle basiert, wobei der Druckunterschiedswert an eine Invertervorrichtung übertragen wird, die die Drehzahl der Mühlenzufuhreinrichtung steuert.

9. Verfahren nach Anspruch 4,
**dadurch gekennzeichnet,**
**dass** der Schritt zum Herstellen der Körner durch eine Granuliereinrichtung ausgeführt wird, die aus einer zylindrischen Kammer, in die die gemahlene Mischung eingeführt und durch eine Rotationsbewegung in Aggregate geformt wird, und Zickzack-Kammern besteht, in denen die kugelförmigen Körner fertig gestellt werden, wobei die Granuliereinrichtung ferner einen Dispersionsstab wie auch eine radiale Wasserzerstäubung umfasst, um einen Feuchtegehalt der Mischung von etwa 15 bis 16 % zu erhalten.

10. Verfahren nach Anspruch 9,
**dadurch gekennzeichnet,**
**dass** farbige Körner durch eine Verteilung von in Wasser suspendierten Farbpigmenten hergestellt werden, die durch Gruppen horizontaler paralleler Düsen erhalten werden, die in der zylindrischen Kammer angeordnet sind.

11. Verfahren nach Anspruch 9,
**dadurch gekennzeichnet,**
**dass** die Granuliereinrichtung auf Vibrationen absorbierenden Gummirädern ruht und durch katalytische Außenlampen erhitzt wird, um die Bildung von Zunder aufgrund einer Wasserkondensation in der Aggregierungskammer zu vermeiden.

12. Verfahren nach Anspruch 1,
**dadurch gekennzeichnet,**
**dass** der Schritt zum Dosieren zumindest einer gemahlenen Mischung ausgeführt wird, indem ein vorbeladener Puffertank gewogen wird und seine Gesamtgewichtsverringerung überwacht wird.

13. Verfahren nach Anspruch 4 oder 5,
**dadurch gekennzeichnet,**
**dass** das Verfahren zum Herstellen fester Körner einen letzten Schritt zum Trocknen umfasst, der durch Ströme aus heißer Luft bei etwa 150°C ausgeführt wird, die durch die Mikrolöcher eines Trocknerbettes strömen, um den Feuchtegehalt der Körner auf bis zu 5 bis 7 % zu verringern, wobei die Körner dann bei Raumtemperatur gekühlt werden, bevor sie den Trockner verlassen, um eine Kondensation während des Transportvorganges zu vermeiden.

14. Verfahren nach Anspruch 1,
**dadurch gekennzeichnet,**
**dass** die Rohmaterialmischung umfasst:
Kaolinit-Ton 20 - 25 %
Illit-Ton 25 - 30 %
Natrium-Feldspat 25 - 30%
Natrium-Kalium-Feldspat 10 - 15 %
Sand 5- 10 %
Talg 2-4%
Rohabfall 0,5 - 1 %
verbrannter Abfall 2 - 4 %
gelöschter Kalk 0,05-0,1%.

15. Presse mit Pressenpolstern zur Formung von Keramikfliesen,
**dadurch gekennzeichnet,**
**dass** die Pressenpolster mit einer Lage aus weichem Gummi bedeckt sind, die eine Weichheit von 45 Shore oder mehr aufweist und die Lage eine Dicke von 3 mm oder mehr besitzt.

16. Presse nach Anspruch 15,
**dadurch gekennzeichnet,**
**dass** die Weichgummilage eine Weichheit von 60 Shore und eine Dicke von 5 mm aufweist.

17. Anlage zur Herstellung von Keramikfliesen mit: einem Mittel (1) zur Lagerung von zumindest einer Mischung aus Rohmaterial (8); einem Mittel (2) zur Auswahl und zum Dosieren der Mischung und einem Mittel (21) zur Versorgung einer Mühle (3), die zum Mahlen der dosierten Mischung bestimmt ist; einem Mittel (4) zum Lagern zumindest einer gemahlenen Mischung, einem Mittel (5) zur Auswahl zumindest einer gemahlenen Mischung von dem Lagermittel (4) und einem Mittel (51) zum Dosieren und Versorgen einer Granuliereinrichtung (6), der zur Herstellung fester Körner bestimmt ist; einem Mittel (61) zum Trocknen für das einstellbare Trocknen der festen Körner; einem Mittel (7) zum Sieben und Lagern zumindest eines Typs der Körner; einem Mittel zum Pressformen der Körner für die Formung von Keramikfliesen,
**dadurch gekennzeichnet,**
**dass** das Mittel zum Pressformen mit Presspolstern, die durch eine Lage aus Weichgummi bedeckt sind, und mit einem Mittel zum Trocknen und Sintern der geformten Fliesen versehen ist.

18. Keramikfliesen,
**dadurch gekennzeichnet,**
**dass** sie aus festen Körnern, die zumindest teilweise von der Außenfläche der Fliese hervortreten, mit einem Herstellverfahren nach Anspruch 1 hergestellt sind.

19. Fliesen nach Anspruch 18,
**dadurch gekennzeichnet,**
**dass** sie einen Rauhigkeitswert von größer als 330 besitzen, der durch eine Messvorrichtung PERTHOMETER S3P gemessen ist, die durch MAHR-PERTHEN GmbH hergestellt ist.

20. Fliesen nach Anspruch 18,
**dadurch gekennzeichnet,**
**dass** sie einen durchschnittlichen Reibungskoeffizient von größer als 0,7 gemäß dem B.C.R.-Messverfahren aufweisen.

## Revendications

1. Procédé de fabrication de carreaux de céramique, comprenant une étape de sélection et de dosage d'au moins un mélange de matières brutes à broyer, une étape de broyage dudit mélange, une étape de dosage du mélange broyé, un procédé de fabrication de grains céramiques solides à partir dudit mélange dosé et broyé, une étape de moulage à pression desdits grains et une étape de cuisson des grains moulés à pression, **caractérisé en ce que** ledit moulage à pression est exécuté par des presses munies de patins de compression recouverts d'une couche de caoutchouc mou pour maintenir la structure des grains à la surface du carreau fabriqué d'une manière sensiblement non modifiée.

2. Procédé selon la revendication 1, **caractérisé en ce que** ladite étape de moulage à pression est exécutée de telle manière que les grains à la surface externe du carreau émergent au moins partiellement de la surface de carreau.

3. Procédé selon la revendication 1, **caractérisé en ce que** lesdits patins de compression sont recouverts d'une couche de caoutchouc mou d'une dureté de 45 Shore ou plus, et d'une épaisseur de 3 mm ou plus.

4. Procédé selon la revendication 1, **caractérisé en ce que** lesdits grains sont sensiblement des grains solides sphériques obtenus par granulation.

5. Procédé selon la revendication 1, **caractérisé en ce que** lesdits grains sont sensiblement des grains prismatiques solides obtenus par la compression de grains creux ou de poudres fines et en désagrégeant ensuite les poudres comprimées.

6. Procédé selon la revendication 1, **caractérisé en ce que** ladite étape de moulage à pression est exécutée à une pression entre 450 et 500 kg/cm².

7. Procédé selon la revendication 1, **caractérisé en ce que** ladite étape de broyage du mélange de matières brutes est exécutée par un broyeur à rouleaux à séchoir vertical avec un dispositif d'amenée de disque, le broyeur étant constitué de deux rouleaux coniques tournant autour d'un axe fixe et exerçant sur un chemin circulaire horizontal une pression ajustable comprise de préférence entre 8 à 11 MPa (80 à 110 bars).

8. Procédé selon la revendication 2, **caractérisé en ce que** le cycle d'ajustage de broyage est basé sur la mesure de la différence de pression à l'entrée et à la sortie du circuit pneumatique du broyeur, la valeur de différence de pression étant transmise à un dispositif inverseur qui commande la vitesse de rotation du dispositif d'amenée du broyeur.

9. Procédé selon la revendication 4, **caractérisé en ce que** ladite étape de fabrication des grains est exécutée par un granulateur pourvu d'une chambre cylindrique dans laquelle le mélange broyé est introduit et est agrégé par un mouvement de rotation et par des chambres zigzag, où les grains sphériques sont finis, le granulateur présente en outre une tige de dispersion et une nébulisation radiale d'eau pour obtenir une teneur en humidité du mélange d'environ 15 à 16%.

10. Procédé selon la revendication 9, **caractérisé en ce que** des grains colorés sont fabriqués par une distribution de pigments de couleur en suspension dans l'eau obtenue par des groupes de buses parallèles horizontales placées à l'intérieur de la chambre cylindrique.

11. Procédé selon la revendication 9, **caractérisé en ce que** le granulateur repose sur des roues en caoutchouc absorbant les vibrations et est chauffé par des lampes catalytiques externes pour éviter la formation d'écailles à cause de la condensation de l'eau dans la chambre d'agrégation.

12. Procédé selon la revendication 1, **caractérisé en ce que** ladite étape de dosage d'au moins un mélange broyé est exécutée en pesant une cuve tampon chargé préalablement et en surveillant l'ensemble de sa réduction de poids.

13. Procédé selon la revendication 4 ou 5, **caractérisé en ce que** ledit procédé de fabrication des grains solides comprend une étape de séchage finale qui est exécutée par des flux d'air chaud à environ 150°C qui passent à travers les micro-trous d'un lit de séchoir pour réduire la teneur en humidité des grains jusqu'à 5-7%, les grains étant ensuite refroidis à la température ambiante avant qu'elles sortent du séchoir pour éviter la condensation pendant l'opération de transport.

14. Procédé selon la revendication 1, **caractérisé en ce que** ledit mélange de matières brutes est constitué de:
| | |
|---|---|
| Argile de kaolinite | 20-25% |
| Argile d'illite | 25-30% |
| Sodium feldspath | 25-30% |
| Sodium-potassium feldspath | 10-15% |
| Sable | 5-10% |
| Talc | 2-4% |
| Déchets de matières brutes | 0,5-1% |
| Déchets de cuisson | 2-4% |
| Chaux éteinte | 0,05-0,1 |

15. Presse pourvue de patins de compression pour former des carreaux de céramique, **caractérisée en ce que** les patins de compression sont recouverts d'une couche en caoutchouc mou d'une dureté de 45 Shore ou plus, et ladite couche présente une épaisseur de 3 mm ou plus.

16. Presse selon la revendication 15, **caractérisée en ce que** ladite couche en caoutchouc mou a une dureté de 60 Shore et une épaisseur de 5 mm.

17. Usine de fabrication de carreaux de céramique comprenant un moyen de stockage (1) d'au moins un mélange de matières brutes (8); un moyen de sélection et de dosage (2) dudit mélange et un moyen d'amenée (21) d'un broyeur (3) destiné à broyer ledit mélange dosé; un moyen de stockage (4) d'au moins un mélange broyé; un moyen de sélection (5) d'au moins un mélange broyé dudit moyen de stockage (4) ainsi qu'un moyen de dosage et d'amenée (51) d'un granulateur (6) destiné à la fabrication de grains solides; un moyen de séchage (61) pour sécher d'une manière ajustable lesdits grains solides; un moyen de criblage et de stockage (7) d'au moins un type de grains; un moyen de moulage à pression desdits grains pour former les carreaux de céramique, **caractérisée en ce que** lesdits moyens de moulage à pression sont pourvus de patins de compression recouverts d'une couche de caoutchouc mou, et de moyens de séchage et de frittage des carreaux formés.

18. Carreaux céramiques, **caractérisés en ce qu'**ils sont réalisés à partir de grains solides émergeant au moins partiellement de la surface externe du carreau, selon un procédé de fabrication en accord avec la revendication 1.

19. Carreaux selon la revendication 18, **caractérisés en ce qu'**ils présentent une valeur de rugosité supérieure à 330 mesurée par un dispositif de mesure PERTHOMETER S3P fabriqué par MAHR-PERTHEN GmbH.

20. Carreaux selon la revendication 18, **caractérisés en ce qu'**ils présentent un coefficient de friction moyen supérieur à 0,7 selon la méthode de mesure B.C.R.
